# EUROPEAN PATENT SPECIFICATION

(11) **EP 3 854 656 B1**
(45) Date of publication and mention of the grant of the patent: **01.03.2023**
(21) Application number: 21152591.0
(22) Date of filing: 20.01.2021
(51) Int. Cl.: B61F 5/10, G06K 9/00, G06T 7/00, B61K 9/00

(54) **METHOD FOR CONTROLLING THE VERTICAL POSITION OF A VEHICLE AND ASSOCIATED CONTROL ASSEMBLY**
VERFAHREN ZUR STEUERUNG DER VERTIKALEN POSITION EINES FAHRZEUGS UND ZUGEHÖRIGE STEUERUNGSANORDNUNG
PROCÉDÉ DE RÉGLAGE DE LA POSITION VERTICALE D'UN VÉHICULE ET ENSEMBLE DE RÉGLAGE ASSOCIÉ

(30) Priority: 21.01.2020 IN 202041002712
(43) Date of publication of application: 28.07.2021
(73) Proprietor: ALSTOM Transport Technologies, 93400 Saint-Ouen (FR)
(72) Inventor: FAROOQUI, Asghar, 560065 BANGALORE, KARNATAKA (IN)
(74) Representative: Lavoix

(56) References cited:
- EP-A1- 3 492 306
- JP-A- H05 116 627
- JP-A- 2006 027 477
- JP-A- 2008 107 291
- JP-B2- 4 732 076
- KR-B1- 100 756 269
- KR-B1- 101 981 211
- US-A1- 2018 001 914
- ETXEBERRIA-GARCIA MIKEL ET AL: "Application of Computer Vision and Deep Learning in the railway domain for autonomous train stop operation", 2020 IEEE/SICE INTERNATIONAL SYMPOSIUM ON SYSTEM INTEGRATION (SII), IEEE, 12 January 2020 (2020-01-12), pages 943-948, XP033731180, DOI: 10.1109/SII46433.2020.9026246 [retrieved on 2020-03-05]

## Description

The present invention relates to a method according to the preamble of claim 1.

JP 4 732076 B2 discloses a method for measuring a position of a carriage of a railway vehicle, relatively to a platform.

In the field of railway transport of passengers, a vehicle usually performs several stops in railway stations, in order to allow the exit or the entry of passengers.

The access of the passengers to a carriage operates at the level of the flooring of the carriage which is found globally positioned facing the platform of the station.

However, the difference in heights, which may exist between the floor of the carriage and the platform may prove to be unacceptable for certain users, notably those said to be with reduced mobility.

US 2018/0001914 discloses a method for controlling the position relatively to a platform of a floor of a carriage by measuring the height of at least a suspension, estimating the height of the top of the chassis and adjusting the height of at least one suspension. The step for estimating the height of a suspension comprises, among other calculations, the calculation of the flexure under load of the suspension.

This method is however not entirely satisfactory. Indeed, the method disclosed in this prior art involves several sensors that may incur a significant cost. Furthermore, this method requires the use and the calculation of several parameters which are time-consuming and error-prone.

An object of the invention is therefore to propose a method allowing simple modifications of the height of a transport vehicle that does not require unnecessary sensors or complex calculation.

For this purpose, the object of the invention is a method according to the characterizing part of claim 1.

According to particular embodiments, the method includes one or several of the features of claims 2 to 8.

The invention also relates to a control assembly according to claim 9.

According to a particular embodiment, the assembly is according to claim 10.

The invention will be better understood upon reading the description which follows, given as an example and made with reference to the appended drawings, wherein:
- Fig. 1 is a simplified sectional view of a vehicle carriage according to the invention and of a station platform;
- Fig. 2 is a front view of a first station platform;
- Fig. 3 is a front view of a second station platform;
- Fig. 4 is a front view of a third station platform;
- Fig. 5 is a front view of the second station platform of Fig. 3;
- Fig. 6 is another front view of the second station platform of Fig. 3;
- Fig. 7 is a front view of a second example of the first station platform;
- Fig. 8 is a front view of a second example of a second station platform;
- Fig. 9 is a front view of a second example of a third station platform;
- Fig. 10 is a front view of the second station platform of Fig. 9;
- Fig. 11 is another front view of the second station platform of Fig. 9;
- Fig. 12 is another front view of the second station platform of Fig. 9;
- Fig. 13 is a schematic drawing of a control assembly according to the invention.

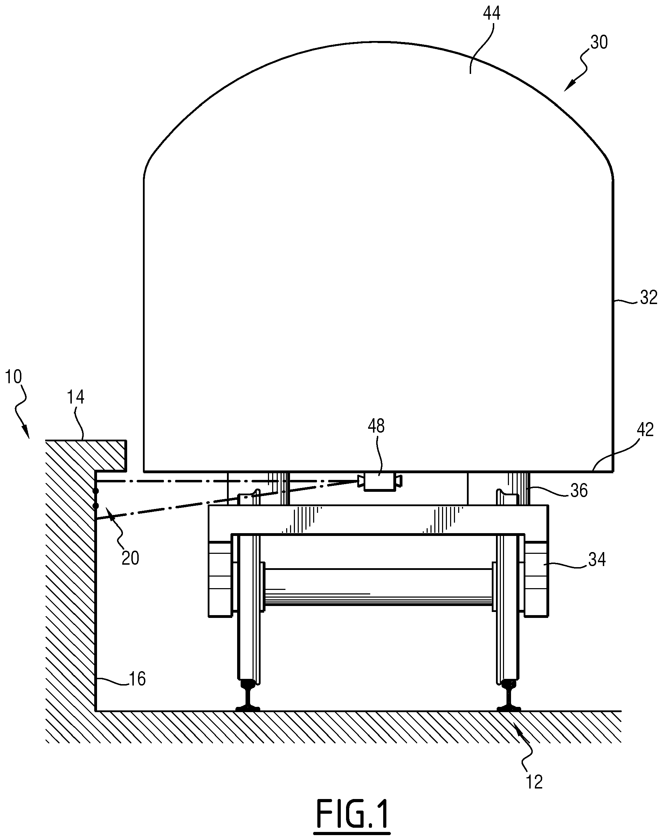

A platform 10 of a railway station is illustrated, as a section, in a simplified way on Figure 1. The platform 10 faces at least one railway track 12 and protrudes vertically laterally from the track 12.

The platform 10 comprises an upper surface 14 and a vertical surface 16.

The upper surface 14 is a surface on which passengers stand to get access to a transport vehicle, for example a train, waiting at the station.

The vertical surface 16 faces the railway track 12 and comprises at least one pattern 20 visible from the track 12.

The at least one pattern 20 is specific to the platform 10. Thus, the pattern 20 is distinguishable from any other pattern 20 on any other platform 10.

The at least one pattern 20 comprises at least one distinguishable element 22 that is distinguishable from the other elements of said at least one pattern 20.

The distinguishable element 22 of the pattern 20 is specific to the pattern 20.

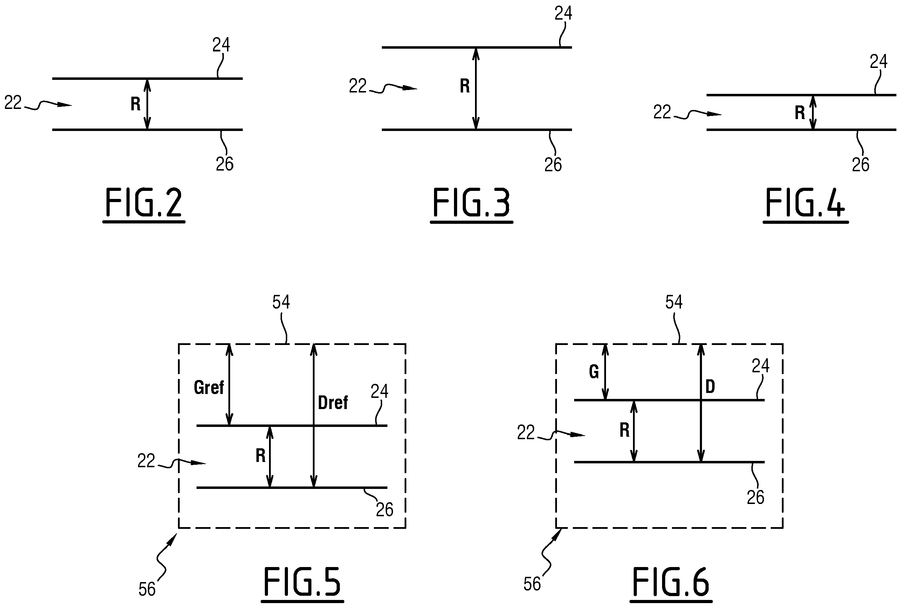

According to the embodiment illustrated on Figures 2 to 6, the pattern 20 comprises at least two recognizable parallel lines, that are one upper line 24 and one lower line 26. The upper line 24 and the lower line 26 are separated by a gap R. The distinguishable element 22 of the pattern 20 is the gap R between the upper line 24 and the lower line 26. The upper lines 24 and lower lines 26 of patterns 20 of a first station platform, of a second station platform and of a third station platform respectively illustrated on Figures 2, 3 and 4 are separated by a gap R that is unique and different for each platform.

At least a carriage 30 of a transport vehicle moving on rails is illustrated on Figure 1.

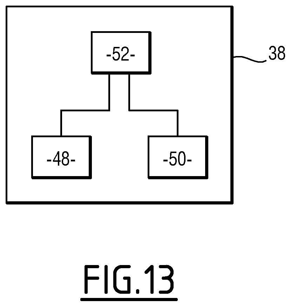

The carriage 30 comprises a body 32, at least one bogie 34, at least one suspension 36 interposed between the body 32 and the bogie 34 and a control assembly 38 (visible in figure 13).

The bogie 34 is a usual bogie and will not be described in detail here.

The bogie 34 is at a fixed distance from the track 12.

The body 32 comprises a floor 42 and a passenger compartment 44.

The floor 42 is a surface on which the passengers stand when they are in the passenger compartment 44.

When the carriage 30 is at a station, the floor 42 of the carriage 30 and the upper surface 14 of the station platform 10 can be vertically misaligned. When the carriage 30 is at a station, the floor 42 of the carriage 30 has to be aligned with the upper surface 14 of the station platform 10 to ensure a safe and easy boarding or deboarding of the passengers.

The suspension 36 is placed between the body 32 and the bogie 34.

The suspension 36 yields to the load of the body 32. For example, the suspension 36 contracts when the load of the body 32 increases and expands when the load of the body 32 decreases.

The suspension 36 is configured to change the distance between the bogie 34 and the body 32. For example, the suspension 36 comprises cylinders to lift or lower the body 32 by applying a force on the body 32.

The control assembly 38 comprises a camera 48, a memory 50 and a controller 52. The control assembly 38 is schematically illustrated on Figure 13.

The camera 48 is fixed under the carriage 30. It extends transversely to the longitudinal axis of the body 32.

When the carriage 30 is at a station, the camera 48 is able to capture an image of the at least one pattern 20 of the platform 10.

According to the embodiment illustrated on Figure 1, the camera 48 is borne by the body 32.

According to the embodiment illustrated on Figures 2 to 6, the camera 48 is configured so that, for any platform 10, the upper line 24 and the lower line 26 of at least a pattern 20 are in the field of view of the camera 48.

The memory 50 is for example a hard drive memory.

The memory 50 is able to store the images captured by the camera 48.

For example, a reference image for each platform 10 can be stored in the memory 50, the reference image being an image captured by the camera 48 when the carriage 30 is at an expected position relative to the platform 10.

The carriage 30 is said to be at an expected position relative to the platform 10 when, for example, the floor 42 of the carriage 30 is aligned with the upper surface 14 of the platform 10.

The controller 52 is for example a processor able to process software modules contained in the memory.

The controller 52 is configured to recognize the at least one pattern 20 of an image and thus, recognize the platform 10 associated to this pattern 20.

The controller 52 recognizes the pattern 20 by recognizing the at least one distinguishable element 22 that is distinguishable from the other elements of said pattern 20 and that is specific to said pattern 20.

According to the embodiment illustrated on Figures 2 to 6, the controller 52 measures the gap R between the upper line 24 and the lower line 26 of the pattern 20. The controller 52 also measures the distance between the lines of the pattern 20 and at least one edge of the image frame 56. The controller 52 measures the distance between the lines of the pattern 20 and the upper edge 54 of the image frame 56.

The controller 52 is configured to query a database within the memory 50 that associates each distinguishable element 22 with a specific platform 10.

The controller 52 is configured to select a reference image of the recognized platform 10 in the database that is the reference image of the platform 10 associated to the distinguishable element 22.

According to the embodiment illustrated on Figures 2 to 6, when the controller 52 measures a gap R between the upper line 24 and the lower line 26 of the pattern 20, the controller 52 selects, in the database, the reference image of the specific platform 10 associated with the gap R. An example of a reference image is illustrated on Figure 5. An example of a captured image is illustrated on Figure 6.

The controller 52 is configured to compare the image of the platform 10 captured by the camera 48 with the reference image of said platform 10.

According to the embodiment of Figures 2 to 6, the controller 52 measures the distance D between the upper edge 54 of the image frame 56 and the lower line 26 of the pattern 20 on the captured image of the platform 10 as illustrated on Figure 6. The controller 52 also recognizes the distance Dref between the upper edge 54 of the image frame 56 and the lower line 26 of the pattern 20 on the reference image of the platform 10 as illustrated on Figure 5. The controller 52 then compares D and Dref.

The controller 52 is then configured to calculate the vertical displacement needed to get the carriage 30 to the expected position relative to the platform 10. When the carriage 30 is at the expected position relative to the platform 10, the image frame visible for the camera 48 is the same as the reference image. According to the embodiment of Figures 5 and 6, the controller 52 calculates the vertical displacement L so that D + L = Dref.

The controller 52 is then configured to actuate the suspension 36 to elevate or to lower the body 32 relatively to the bogie 34 to get the body 32 at the expected position relative to the platform 10. According to the embodiment of Figures 5 and 6, the controller 52 actuates the suspension 36 that makes the body 32 move vertically upward or downward relative to the bogie 32 a distance L. If L is positive, the controller 52 actuates the suspension 36 that makes the body 32 move vertically upward a distance L. If L is negative, the controller 52 actuates the suspension 36 that makes the body 32 move vertically downward a distance -L.

A method for controlling the position of the floor 42 of a carriage 30 of a vehicle will now be described.

The method is applied for each bogie 34 of each carriage 30 of the vehicle.

A carriage 30 and a platform 10 as described above are given.

The floor 42 of the carriage 30 is at a certain height respectively to the track 12, due to some load on the carriage 30.

The carriage 30 stops at the platform 10. The memory 50 of the control assembly 38 comprises a reference image of the platform 10. The reference image has been taken by the camera 48 when the carriage 30 is at the expected position relative to the platform 10. The carriage 30 is said to be at the expected position relative to the platform when the floor 42 of the carriage 30 and the upper surface 14 of the platform are aligned. According to the embodiment illustrated on Figures 2 to 6, an example of a reference image of the platform 10 is illustrated on Figure 5.

The camera 48 captures an image of the at least one pattern 20 on the vertical surface 16 of the platform 10. According to the embodiment illustrated on Figures 2 to 6, an example of a captured image of the platform 10 is illustrated on Figure 6.

The image of the pattern 20 is then sent to the controller 52.

The controller 52 recognizes the pattern 20 and the at least one distinguishable element 22 distinguishable from the other elements of said pattern 20 and specific to said pattern 20. By recognizing the distinguishable element 22 of the pattern 20, the controller 52 recognizes the platform 10.

According to the embodiment illustrated on Figures 2 to 6, the distinguishable element 22 is the gap R between the upper line 24 and the lower line 26 of the pattern 20.

The controller 52 queries the database within the memory 50 that associates each distinguishable element 22 with a specific platform 10. The controller 52 selects the reference image of the recognized platform 10 associated to the distinguishable element 22.

According to the embodiment illustrated on Figures 5 and 6, the controller 52 selects the reference image associated to the recognized gap R between the upper line 24 and the lower line 26.

The controller 52 compares the captured image of the platform 10 with the reference image of the platform 10.

According to embodiments of Figures 2 to 6, the controller 52 measures the distance D between the upper edge of the image frame 54 and the lower line 26 of the pattern 20 on the captured image of the platform 10 illustrated on Figure 6. The controller 52 recognizes the distance Dref between the upper edge of the image frame 54 and the lower line 26 of the pattern 20 on the reference image of the platform 10 illustrated on Figure 5. The controller 52 then compares D and Dref.

The controller 52 calculates the vertical displacement L needed so that the image frame visible for the camera 48 is the same as the reference image. According to the embodiment of Figures 5 and 6, the controller 52 calculates the vertical displacement L needed so that D + L = Dref.

The controller 52 actuates the suspension 36 so that the suspension 36 makes the body 32 move vertically upward or downard a distance L relative to the bogie 34. If L is positive, the controller 52 actuates the suspension 36 that makes the body 32 move vertically upward a distance L. If L is negative, the controller 52 actuates the suspension 36 that makes the body 32 move vertically downward a distance -L.

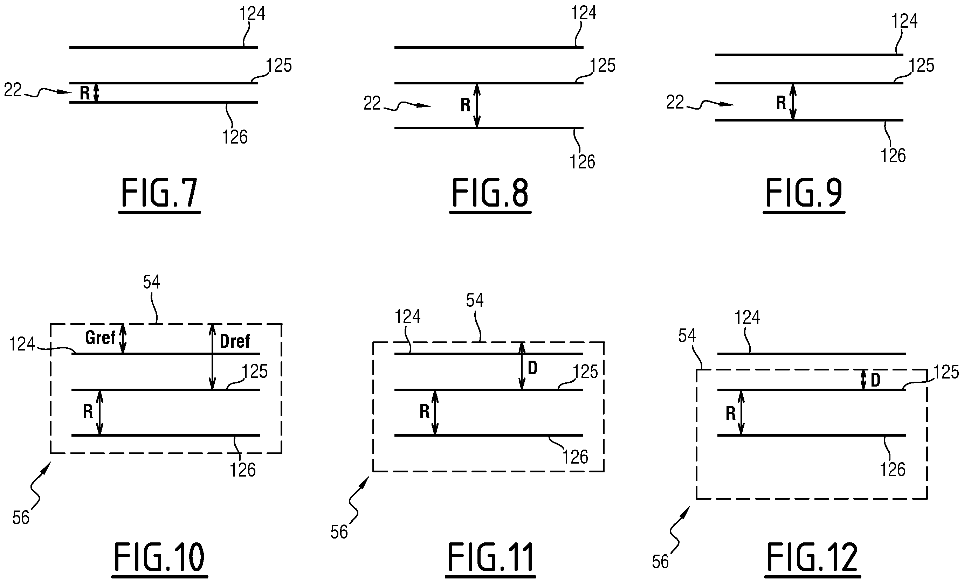

According to a second embodiment illustrated on Figures 7 to 12, the at least one pattern 20 comprises at least three recognizable parallel lines that are one upper line 124, one middle line 125 and one lower line 126. Each line 124, 125, 126 is separated from another line 124, 125, 126 by a gap. The at least one distinguishable element 22 is the size R of the gap between the middle line 125 and the lower line 126. The middle lines 125 and lower lines 126 of patterns 20 of a first station platform, of a second station platform and of a third station platform respectively illustrated on Figures 7, 8 and 9 are separated by a gap R that is unique for each platform.

According to the second embodiment, as illustrated on Figure 12, the camera 48 is configured so that, for any platform 10, at least the middle line 125 and the lower line 126 of at least a pattern 20 are in the field of view of the camera 48.

According to the second embodiment illustrated on Figures 7 to 12, the controller 52 is configured to measure the gap R between the middle line 125 and the lower line 126.

Alternatively, according to the first embodiment, the controller 52 is configured to measure the distance G between the upper edge 54 of the frame and the upper line 24 of the pattern 20 on the captured image of a platform 10. An example of a captured image is illustrated on Figure 6. The controller 52 is also configured to recognize the distance Gref between the upper edge 54 of the image frame 56 and the upper line 24 of the pattern 20 on the reference image of the platform 10. An example of a reference image is illustrated on Figure 5. The controller is then configured to compare D and Dref and to compare G and Gref.

Alternatively, according to the second embodiment, the controller 52 is configured to measure the distance G between the upper edge 54 of the frame and the upper line 124 of the pattern 20 on the captured image of a platform 10. An example of a captured image is illustrated on Figure 11. The controller 52 is also configured to recognize the distance Gref between the upper edge 54 of the frame and the upper line 124 of the pattern 20 on the reference image of the platform 10. An example of a reference image is illustrated on Figure 10. The controller is then configured to compare D and Dref and to compare G and Gref.

Alternatively, according to the first and the second embodiment, the controller 52 is configured to calculate the vertical displacement L needed so that D + L = Dref and G + L = Gref.

Alternatively, according to the first and the second embodiment, after the height of the body 32 has been adjusted, the camera 48 is configured to capture another image and the controller 52 is configured to evaluates if D = Dref.

Alternatively, according to the first and the second embodiment, after the height of the body 32 has been adjusted, the camera 48 is configured to capture another image and the controller 52 is configured to evaluates if D = Dref and G = Gref.

According to the first embodiment, the method for controlling the position of the carriage 30 comprises the step in which the controller 52 measures the distance G between the upper edge 54 of the frame and the upper line 24 of the pattern 20 on the captured image of a platform 10. The controller 52 also recognizes the distance Gref between the upper edge 54 of the frame and the upper line 24 of the pattern 20 on the reference image of the platform 10. The controller 52 then compares D and Dref and compares G and Gref.

According to the second embodiment, the method for controlling the position of the carriage 30 comprises the step in which the controller 52 measures the distance G between the upper edge 54 of the frame and the upper line 124 of the pattern 20 on the captured image of a platform 10. The controller 52 also recognizes the distance Gref between the upper edge 54 of the frame and the upper line 124 of the pattern 20 on the reference image of the platform 10. The controller 52 then compares D and Dref and compares G and Gref.

Alternatively, according to the first and the second embodiment, the method for controlling the position of the carriage 30 comprises the step in which the controller 52 calculates the vertical displacement L needed so that D + L = Dref and G + L = Gref.

Alternatively, according to the first and the second embodiment, after the height of the body 32 has been adjusted, the method for controlling the position of the carriage 30 comprises the step in which the camera 48 captures another image and the controller 52 evaluates if D = Dref.

Alternatively, according to the first and the second embodiment, after the height of the body 32 has been adjusted, the method for controlling the position of the carriage 30 comprises the step in which the camera 48 captures another image and the controller 52 evaluates if D = Dref and G = Gref.

## Claims

1. A method for controlling a position of a floor (42) of a carriage (30) of a railway vehicle moving on rails, relatively to at least a platform (10), the carriage (30) comprising:
- a body (32) comprising the floor (42),
- at least one bogie (34), and
- at least one suspension (36) interposed between the body (32) and the bogie (34)
the method comprising the following steps :
- determining the level difference between the actual position of the carriage (30) relative to the platform (10) and the expected position of the carriage (30) relative to the platform (10);
- adjusting the height of the suspension (36) for compensating the determined level difference,
**characterized in that** the step of determining the level difference includes :
- capturing an image of at least one predetermined pattern (20) comprised on said at least one platform (10) with a camera (48) borne by the body (32),
- comparing the captured image with a memorized reference image of the at least one pattern (20) of the said platform (10),
- calculating the vertical displacement from the images to determine the level difference.

2. The method according to claim 1, wherein the memorized reference image has been taken when the carriage (30) is at the expected position relative to the platform (10).

3. The method according to claim 1 or 2, comprising a verification step after the step of adjusting the height, the verification step comprising :
- determining the level difference between the actual position of the carriage (30) relative to the platform (10) and the expected position of the carriage (30) relative to the platform (10) and
- adjusting the height of the suspension (36) for compensating the determined level difference.

4. The method according to anyone of the preceding claims, wherein at least one element of the at least one pattern (20) of each platform (10) is distinguishable from the other elements of the at least one pattern (20), the at least one distinguishable element (22) having a specific geometric feature that is associated only to one platform (10) among each platform (10),
the step of determining the level difference including recognizing the platform (10) by recognizing the specific geometric feature and selecting the memorized reference image of the corresponding recognized platform (10).

5. The method according to anyone of claims 1 to 4, wherein the at least one pattern (20) comprises at least two recognizable parallel lines.

6. The method according to claim 5, wherein the at least two recognizable parallel lines are separated by a gap, the size of the gap being specific for each platform (10).

7. The method according to claim 5 or 6, wherein the step of determining the level difference includes comparing the position of the parallel lines of the captured image with the position of the parallel lines of the memorized reference image.

8. The method according to anyone of claims 5 to 7, wherein the step of determining the level difference comprises determining a vertical distance between one of the lines and an upper edge (54) of the image frame (56) and comparing the vertical distance to a reference vertical distance between the same line and an upper edge (54) of a reference image.

9. A control assembly (38) for controlling the position of a floor (42) of a carriage (30) of a railway vehicle moving on rails, relatively to at least a platform (10), the platform (10) comprising at least one predetermined pattern (20), the carriage (30) comprising:
- a body (32) comprising the floor (42),
- at least one bogie (34),
- at least one suspension (36) interposed between the body (32) and the bogie (34),
the control assembly (38) comprising:
- a camera (48) arranged to be placed on the body (32),
- a memory (50), and
- a controller (52) configured for
- determining the level difference between the actual position of the carriage (30) relative to the platform (10) and the expected position of the carriage (30) relative to the platform (10);
- adjusting the height of the suspension (36) for compensating the determined level difference,
**characterized in that** the step of determining the level difference includes :
- capturing an image of the at least one pattern (20) placed on the platform (10) with the camera (48),
- comparing the captured image with a memorized reference image of the at least one pattern (20) of the said platform (10),
- calculating the vertical displacement from the images to determine the level difference.

10. The control assembly (38) according to claim 9, wherein the memorized reference image has been taken when the carriage (30) is at the expected position relative to the platform (10), the memorized reference image being stored in the memory (50).

## Patentansprüche

1. Verfahren zum Steuern einer Position eines Bodens (42) eines Wagens (30) eines sich auf Schienen bewegenden Schienenfahrzeugs, in Bezug auf mindestens einen Bahnsteig (10), der Wagen (30) umfassend:
- einen Körper (32), umfassend den Boden (42),
- mindestens ein Drehgestell (34), und
- mindestens eine Aufhängung (36), die zwischen dem Körper (32) und dem Drehgestell (34) eingefügt ist
das Verfahren umfassend die folgenden Schritte:
- Bestimmen der Höhendifferenz zwischen der aktuellen Position des Wagens (30) in Bezug auf den Bahnsteig (10) und der erwarteten Position des Wagens (30) in Bezug auf den Bahnsteig (10);
- Einstellen der Höhe der Aufhängung (36), um den bestimmten Höhenunterschied auszugleichen,
**dadurch gekennzeichnet, dass** der Schritt eines Bestimmens des Höhenunterschieds Folgendes umfasst:
- Erfassen eines Bilds von mindestens einem vorbestimmten Muster (20), das auf dem mindestens einen Bahnsteig (10) enthalten ist, mit einer Kamera (48), die von dem Körper (32) getragen wird,
- Vergleichen des aufgenommenen Bilds mit einem gespeicherten Referenzbild des mindestens einen Musters (20) des Bahnsteigs (10),
- Berechnen der vertikalen Verschiebung aus den Bildern, um den Höhenunterschied zu bestimmen.

2. Verfahren nach Anspruch 1, wobei das gespeicherte Referenzbild aufgenommen wurde, als der Wagen (30) in der erwarteten Position in Bezug auf den Bahnsteig (10) war.

3. Verfahren nach Anspruch 1 oder 2, umfassend einen Überprüfungsschritt nach dem Schritt eines Einstellens der Höhe, der Überprüfungsschritt umfassend:
- Bestimmen der Höhendifferenz zwischen der aktuellen Position des Wagens (30) in Bezug auf den Bahnsteig (10) und der erwarteten Position des Wagens (30) in Bezug auf den Bahnsteig (10); und
- Einstellen der Höhe der Aufhängung (36), um den bestimmten Höhenunterschied auszugleichen.

4. Verfahren nach einem der vorherigen Ansprüche, wobei mindestens ein Element des mindestens einen Musters (20) von jedem Bahnsteig (10) von den anderen Elementen des mindestens einen Musters (20) unterscheidbar ist, wobei das mindestens eine unterscheidbare Element (22) ein spezifisches geometrisches Merkmal aufweist, das nur mit einem Bahnsteig (10) von jedem der Bahnsteige (10) assoziiert ist,
der Schritt eines Bestimmens des Höhenunterschieds ein Erkennen des Bahnsteigs (10) durch Erkennen des spezifischen geometrischen Merkmals und ein Auswählen des gespeicherten Referenzbilds des entsprechenden erkannten Bahnsteigs (10) beinhaltet.

5. Verfahren nach einem der Ansprüche 1 bis 4, wobei das mindestens ein Muster (20) mindestens zwei erkennbare parallele Linien umfasst.

6. Verfahren nach Anspruch 5, wobei die mindestens zwei erkennbaren parallelen Linien durch eine Lücke getrennt sind, wobei die Größe der Lücke für jeden Bahnsteig (10) spezifisch ist.

7. Verfahren nach Anspruch 5 oder 6, wobei der Schritt eines Bestimmens des Höhenunterschieds ein Vergleichen der Position der parallelen Linien des aufgenommenen Bilds mit der Position der parallelen Linien des gespeicherten Referenzbilds beinhaltet.

8. Verfahren nach einem der Ansprüche 5 bis 7, wobei der Schritt eines Bestimmens des Höhenunterschieds ein Bestimmen eines vertikalen Abstands zwischen einer der Linien und einem oberen Rand (54) des Bildrahmens (56) und ein Vergleichen des vertikalen Abstands mit einem vertikalen Referenzabstand zwischen derselben Linie und einem oberen Rand (54) eines Referenzbilds umfasst.

9. Steueranordnung (38) zum Steuern der Position eines Bodens (42) eines Wagens (30) eines sich auf Schienen bewegenden Schienenfahrzeugs in Bezug auf mindestens einen Bahnsteig (10), der Bahnsteig (10) umfassend mindestens ein vorbestimmtes Muster (20), der Wagen (30) umfassend:
- einen Körper (32), umfassend den Boden (42),
- mindestens ein Drehgestell (34),
- mindestens eine Aufhängung (36), die zwischen dem Wagenkasten (32) und dem Drehgestell (34) eingefügt ist,
die Steueranordnung (38) umfassend:
- eine Kamera (48), die angeordnet ist, um auf dem Körper (32) platziert zu sein,
- einen Speicher (50), und
- eine Steuerung (52), die zu Folgendem konfiguriert ist
- Bestimmen der Höhendifferenz zwischen der aktuellen Position des Wagens (30) in Bezug auf den Bahnsteig (10) und der erwarteten Position des Wagens (30) in Bezug auf den Bahnsteig (10);
- Einstellen der Höhe der Aufhängung (36), um den bestimmten Höhenunterschied auszugleichen,
**dadurch gekennzeichnet, dass** der Schritt eines Bestimmens des Höhenunterschieds Folgendes umfasst:
- Erfassen eines Bilds des mindestens einen auf der Bahnsteig (10) angeordneten Musters (20) mit der Kamera (48),
- Vergleichen des aufgenommenen Bilds mit einem gespeicherten Referenzbild des mindestens einen Musters (20) des Bahnsteigs (10),
- Berechnen der vertikalen Verschiebung aus den Bildern, um den Höhenunterschied zu bestimmen.

10. Steueranordnung (38) nach Anspruch 9, wobei das gespeicherte Referenzbild aufgenommen wurde, als der Wagen (30) in der erwarteten Position in Bezug auf den Bahnsteig (10) war, wobei das gespeicherte Referenzbild in dem Speicher (50) gespeichert ist.

## Revendications

1. Procédé pour commander une position d'un plancher (42) d'un wagon (30) d'un véhicule ferroviaire se déplaçant sur des rails, par rapport à au moins une plate-forme (10), le wagon (30) comprenant :
- une caisse (32) comprenant le plancher (42),
- au moins un bogie (34), et
- au moins une suspension (36) interposée entre la caisse (32) et le bogie (34)
le procédé comprenant les étapes suivantes :
- déterminer la différence de niveau entre la position réelle du wagon (30) par rapport à la plate-forme (10) et la position attendue du wagon (30) par rapport à la plate-forme (10) ;
- régler la hauteur de la suspension (36) pour compenser la différence de niveau déterminée,
**caractérisé en ce que** l'étape de détermination de la différence de niveau comprend :
- la capture d'une image d'au moins un motif prédéterminé (20) compris sur ladite au moins une plate-forme (10) avec une caméra (48) portée par la caisse (32),
- la comparaison de l'image capturée avec une image de référence mémorisée du au moins un motif (20) de ladite plate-forme (10),
- le calcul du déplacement vertical à partir des images pour déterminer la différence de niveau.

2. Procédé selon la revendication 1, dans lequel l'image de référence mémorisée a été prise lorsque le wagon (30) était à la position attendue par rapport à la plate-forme (10).

3. Procédé selon la revendication 1 ou 2, comprenant une étape de vérification après l'étape de réglage de la hauteur, l'étape de vérification comprenant :
- la détermination de la différence de niveau entre la position réelle du wagon (30) par rapport à la plate-forme (10) et la position attendue du wagon (30) par rapport à la plate-forme (10) et
- le réglage de la hauteur de la suspension (36) pour compenser la différence de niveau déterminée.

4. Procédé selon l'une quelconque des revendications précédentes, dans lequel au moins un élément du au moins un motif (20) de chaque plateforme (10) est distinguable des autres éléments du au moins un motif (20), le au moins un élément distinguable (22) ayant une caractéristique géométrique spécifique qui n'est associée qu'à une plateforme (10) parmi chaque plateforme (10),
l'étape de détermination de la différence de niveau comprenant la reconnaissance de la plate-forme (10) en reconnaissant la caractéristique géométrique spécifique et en sélectionnant l'image de référence mémorisée de la plate-forme reconnue correspondante (10).

5. Procédé selon l'une quelconque des revendications 1 à 4, dans lequel le au moins un motif (20) comprend au moins deux lignes parallèles reconnaissables.

6. Procédé selon la revendication 5, dans lequel les au moins deux lignes parallèles reconnaissables sont séparées par un espace, la taille de l'espace étant spécifique pour chaque plate-forme (10).

7. Procédé selon la revendication 5 ou 6, dans lequel l'étape de détermination de la différence de niveau comprend la comparaison de la position des lignes parallèles de l'image capturée avec la position des lignes parallèles de l'image de référence mémorisée.

8. Procédé selon l'une quelconque des revendications 5 à 7, dans lequel l'étape de détermination de la différence de niveau comprend la détermination d'une distance verticale entre l'une des lignes et un bord supérieur (54) du cadre d'image (56) et la comparaison de la distance verticale à une distance verticale de référence entre la même ligne et un bord supérieur (54) d'une image de référence.

9. Ensemble de commande (38) pour commander la position d'un plancher (42) d'un wagon (30) d'un véhicule ferroviaire se déplaçant sur des rails, par rapport à au moins une plate-forme (10), la plate-forme (10) comprenant au moins un motif prédéterminé (20), le wagon (30) comprenant :
- une caisse (32) comprenant le plancher (42),
- au moins un bogie (34),
- au moins une suspension (36) interposée entre la caisse (32) et le bogie (34),
l'ensemble de commande (38) comprenant :
- une caméra (48) agencée pour être placée sur la caisse (32),
- une mémoire (50), et
- un dispositif de commande (52) configuré pour
- déterminer la différence de niveau entre la position réelle du wagon (30) par rapport à la plate-forme (10) et la position attendue du wagon (30) par rapport à la plate-forme (10) ;
- régler la hauteur de la suspension (36) pour compenser la différence de niveau déterminée,
**caractérisé en ce que** l'étape de détermination de la différence de niveau comprend :
- la capture d'une image du au moins un motif (20) placé sur la plate-forme (10) avec la caméra (48),
- la comparaison de l'image capturée avec une image de référence mémorisée du au moins un motif (20) de ladite plate-forme (10),
- le calcul du déplacement vertical à partir des images pour déterminer la différence de niveau.

10. Ensemble de commande (38) selon la revendication 9, dans lequel l'image de référence mémorisée a été prise lorsque le wagon (30) était à la position attendue par rapport à la plate-forme (10), l'image de référence mémorisée étant stockée dans la mémoire (50).
